# EUROPEAN PATENT APPLICATION

(11) **EP 4 223 470 A1**
(43) Date of publication of application: **09.08.2023**
(21) Application number: 22020040.6
(22) Date of filing: 08.02.2022
(51) Int. Cl.: B28B 1/00, B28B 11/08, B29C 64/106, B29C 64/194, B29C 64/209, B33Y 30/00

(54) **3D CONSTRUCTION PRINTER HEAD**

(71) Applicant: dvb Délmagyarországi Vasbetonipari Kft., 6728 Szeged (HU)
(72) Inventor: Krepler, Benedek, 7742 Bogád (HU)
(74) Representative: Pintz, György

(57) **Abstract**

The subject of the invention is a 3D construction printer head for creating a printed element (13), the head comprising a nozzle (1) having an inlet (11) and an outlet (10), the nozzle (1) being configured to extrude a layer (14) of building material via its outlet (10); at least one finisher arrangement (2); a finisher arrangement motor (5) and a lifting arrangement (4) for moving the finisher arrangement (2), the finisher arrangement motor (5) and the lifting arrangement (4) being connected to each other. The finisher arrangement (2) comprises an active finisher element (3) for at least partially smoothening a surface of the printed element (13), and an active finisher element motor (6) for rotating the active finisher element (3). A height (h1) of the active finisher element (3) being larger than the height (h2) of the layer (14). This solution provides a 3D construction printer head capable of actively smoothening the surface of the printed structure/wall in a height of more than one layer.

## Description

### TECHNICAL FIELD

The disclosure relates to a 3D construction printer head and a method for the application of the printer head.

### BACKGROUND

Over the last few decades, the role of additive manufacturing in the construction industry has become increasingly important. In particular, concrete (and other cement-based building materials and other building materials with silicate, polymer or other binder) 3D printers have gained popularity in the construction industry since they help save time, effort, and material compared to traditional construction methods. 3D construction printers are capable of creating interior and exterior walls.

However, walls created with 3D printers have an uneven surface, the printed layers of the wall are visibly bumpy and have a roughness. These layers can lack proper bonding and can separate, come apart quite easily after printing, resulting in a weak wall structure. The problem might be partly solved by adding plates, i.e. guide tips to the extruder for passively finishing the walls. However, these passive elements (such as plates, guide tips) have multiple problems. Firstly, as they are fixed to the nozzle, they cannot be taller than the height of one layer, since they can only hang down in the height of one layer. Otherwise, a fixed plate too tall - taller than one layer - would prevent the printer creating the first layer. Accordingly, these plates can only flatten the wall in the height of one layer, making it impossible to sufficiently finish the whole surface of the printed walls and thus help bond the layers together. Secondly, a simple fixed plate is only capable of passive movement and passive flattening (meaning that it can only move together with the extruder, with the same speed, driven by the same motor), leaving the wall still relatively bumpy and weak in structure. Simple fixed plates known in the prior art cannot make extra movements for better finishing.

The height or thickness of one printed layer is usually about 1-5 cm, more frequently about 2-3 cm.

The prior art includes the following patent applications.

Chinese Patent application No. CN107618186 A describes a plastic material 3D printer auxiliary grinding device equipped with rings, guide rods, emery cloth, sponge strips, springs, slide rails, and sliders for polishing the print product.

Patent No. KR102036571 B1 discloses a multi-functional extruder suitable for a concrete rapid prototyping system. It focuses on an output amount control means installed at the nozzle in order to control the output amount. The extruder may be equipped with passive guide tips attached to the detachable nozzle for guiding the concrete and adjusting the angle. These guide tips may also serve as passive smoothening elements.

Chinese Patent application No. CN111456438 A relates to an architectural 3D printing surface modification device that is equipped with a passive trimming plate to flatten the surface of the printed wall.

### SUMMARY

It is an object to provide an improved 3D construction printer head. The foregoing and other objects are achieved by the features of the independent claims. Further implementation forms are apparent from the dependent claims, the description, and the figures.

According to a first aspect, there is provided a 3D construction printer head for creating a printed element, the head comprising a nozzle having an inlet and an outlet, the nozzle being configured to extrude a layer of building material via its outlet; at least one finisher arrangement; a finisher arrangement motor and a lifting arrangement for moving the finisher arrangement, the finisher arrangement motor and the lifting arrangement being connected to each other; the finisher arrangement comprising an active finisher element for at least partially smoothening a surface of the printed element, and an active finisher element motor for moving, rotating the active finisher element; a height of the active finisher element being larger than the height of the layer.

This solution provides an improved 3D construction printer head that can be connected to any 3D construction printer available in the market. This 3D construction printer head comprises at least one movable finisher arrangement. Since the finisher arrangement is movable, the active finisher element can have a larger size, i.e. height larger than the height of one layer. As a result, the 3D construction printer head is capable of actively smoothening the surface of the printed structure/wall in a height of more than one layer. This way, the printer head helps bond the layers hence create a strong wall structure. Furthermore, by smoothening the surface of the printed structure/wall in a height of more than one layer it helps create an integrated, uniformly smooth and flat surface where the separate layers are barely visible anymore. The 3D construction printer head is capable of finishing, flattening the surface any of interior and exterior walls created by the 3D construction printer the printer head is attached to.

In a possible implementation form of the first aspect, the printer head comprises two active finisher element motors and two active finisher elements, a first active finisher element for at least partially smoothening a surface of a first side of the printed element, and a second active finisher element for at least partially smoothening a surface of a second side of the printed element. This facilitates smoothening two sides of a printed element at the same time. If the printed element is for example a wall or a wall-like structure, the two active finisher elements can smoothen the two opposite sides of the printed wall at the same time, right after creating the printed element.

In a further possible implementation form of the first aspect, the printer head comprises two finisher arrangements, a first finisher arrangement and a second finisher arrangement; the first finisher arrangement comprising the first active finisher element and the second finisher arrangement comprising the second active finisher element. This provides at least two active finisher elements that are separately controlled.

In a further possible implementation form of the first aspect, the printer head comprises two finisher arrangement motors and two lifting arrangements such that the first finisher arrangement and the second finisher arrangement can move independently from each other. This facilitates also moving the active finisher elements independently from each other. This provides flexibility, since the active finisher elements can be moved in different directions, with different speed, in different height. As a result, one side or one part of the printed element can be smoothened for a longer period of time.

In a further possible implementation form of the first aspect, the printer head comprises a linear guiding arrangement for guiding the movement of the finisher arrangement in the direction of axis z. This facilitates a guided up-and-down movement of the finisher arrangement(s). This provides an effective and simple structure in which the finisher arrangement only has to move in the direction of axis z. The active finisher element(s) can move along with the finisher arrangement(s).

In a further possible implementation form of the first aspect, the active finisher element is a cylinder or a disk. This facilitates at least two different types of active finisher elements. Both types of active finisher elements can actively move, more particularly rotate while smoothening, but, if needed, a different smoothening effect can be achieved with the different types of active finisher elements.

In a further possible implementation form of the first aspect, the disk is configured to rotate around its rotation axis, said rotation axis being substantially parallel to the rotation axis of the active finisher element motor; and/or the cylinder is configured to rotate around its rotation axis, said rotation axis being substantially perpendicular to the rotation axis of the active finisher element motor, the cylinder being connected to said active finisher element motor by an angle gear drive. This facilitates an improved printer head in which the active finisher elements rotate around their rotation axis. With the help of the rotating movements, the active finisher elements can actively smoothen the surface of the printed element.

In a further possible implementation form of the first aspect, the cylinder is any of a perforated, a threaded or a solid cylinder; and/or the disk is any of a solid, a perforated or a divided disk. The different profiles have different smoothening effects and thus can create different types of surface.

In a further possible implementation form of the first aspect, a longitudinal axis of the nozzle is substantially parallel to the movement direction of the linear guiding arrangement and the axis z. This facilitates an effective and improved printer head, the nozzle extruding the building material in the direction of axis z and the printer head moving in the direction of axis y, which is substantially perpendicular to axis z.

In a further possible implementation form of the first aspect, the lifting arrangement is a spindle or a lever. This facilitates flexibility for the user, as the printer head can include different possible structures for moving the finisher arrangement(s). As an example, a spindle could be used if the printer head needs to have a smaller size and volume, and a lever can be used when the printer head is required to be shorter for any reason.

In a further possible implementation form of the first aspect, the printed element is a wall. This facilitates creating, 3D printing complete building structures, buildings with the printer head. The 3D printer head is able to print walls of any shape (e.g. straight or curved) and any height.

According to a second aspect, there is provided a method for the application of a 3D construction printer head according to claim, wherein the method comprises the following steps:
- a nozzle extruding layers of building material via its outlet one after another thereby creating a printed element;
- after printing at least two layers a finisher arrangement motor and a lifting arrangement moving a finisher arrangement with an active finisher element;
- an active finisher element motor moving an active finisher element such that the active finisher element at least partially smoothens a surface of the printed element, such that a height of the finished surface is larger than a height of the layer. This solution provides an improved method for actively smoothening the surface of the printed element, such as a wall, in a height of more than one layer. This way, the layers bond together and a strong printed element is created that has an integrated, uniformly smooth and flat surface, where the separate layers are barely visible anymore.

In a possible implementation form of the second aspect, a first active finisher element at least partially smoothens a surface of a first side of the printed element, and a second active finisher element at least partially smoothens a surface of a second side of the printed element. This facilitates smoothening the two opposite sides of a printed element, such as a wall. The two sides of a printed element can also be smoothened for a different period of time and/or with different patterns.

In a possible implementation form of the second aspect, during smoothening, the active finisher element is continuously rotating around its rotation axis. This facilitates an intensive, thorough smoothening of any part of the surface of the printed element, resulting in a highly integrated, uniformly smooth and flat surface.

According to a third aspect, there is provided a 3D construction printer comprising the printer head according to the first aspect. This solution provides an improved 3D printer.

This and other aspects will be apparent from the embodiments described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Fig. 1 shows a spatial view of a 3D construction printer head in accordance with one embodiment of the present invention along with a printed element;
Fig. 2 is a spatial view of the 3D construction printer head shown in Fig. 1 along with a printed element with a partially finished surface;
Fig. 3 shows is another spatial view of the 3D construction printer head shown in Fig. 1 and 2;
Fig. 4 shows a spatial view of a 3D construction printer head in accordance with a possible embodiment of the present invention;
Fig. 5 shows a spatial view of a 3D construction printer head in accordance with another possible embodiment of the present invention;
Fig. 6a, 6b and 6c show different possible embodiments of the cylinder;
Fig. 7a, 7b and 7c show different possible embodiments of the disk.

### DETAILED DESCRIPTION

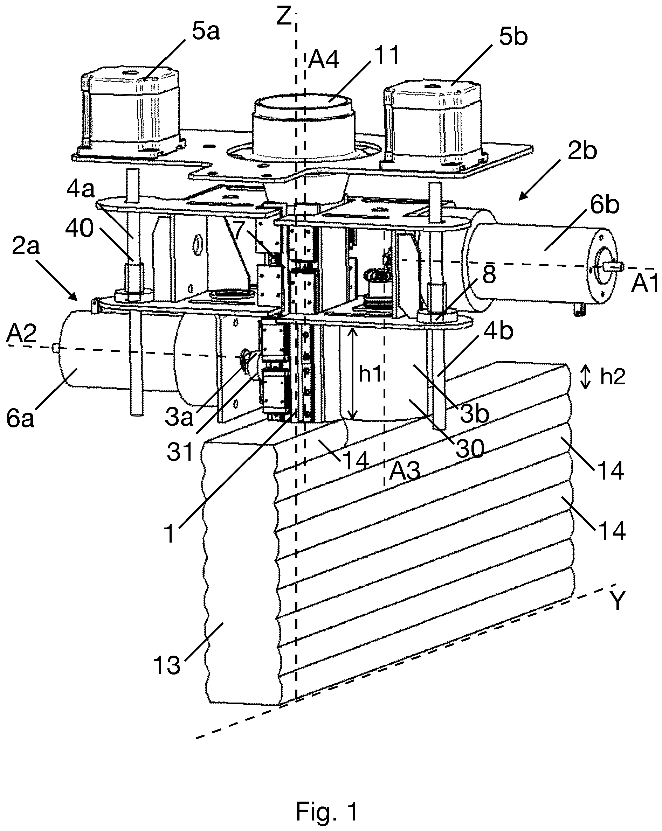

Fig. 1 illustrates the 3D construction printer head in accordance with one embodiment of the present invention. Fig. 1 also shows a printed element 13 that is being printed by the printer head. The printed element 13 is a wall-like structure in Figure 1, but the printer head can create other structures, elements as well. An advantageous use of the printer head can be printing walls as printed elements 13 and therefore creating buildings.

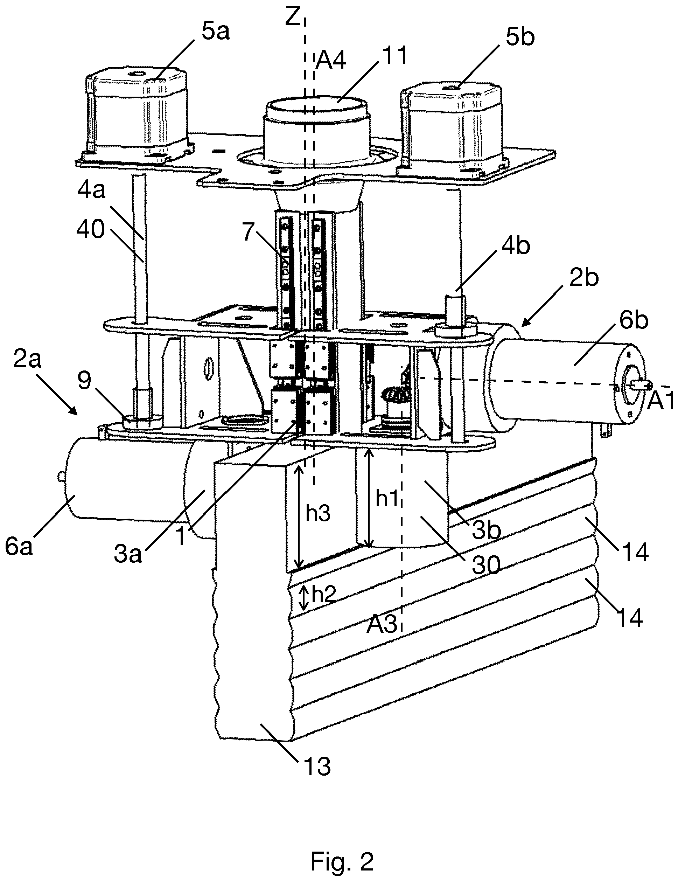

Fig. 2 depicts the 3D construction printer head of Fig. 1, where two opposite sides of the printed element 13 are being smoothened by the active finisher elements 3.

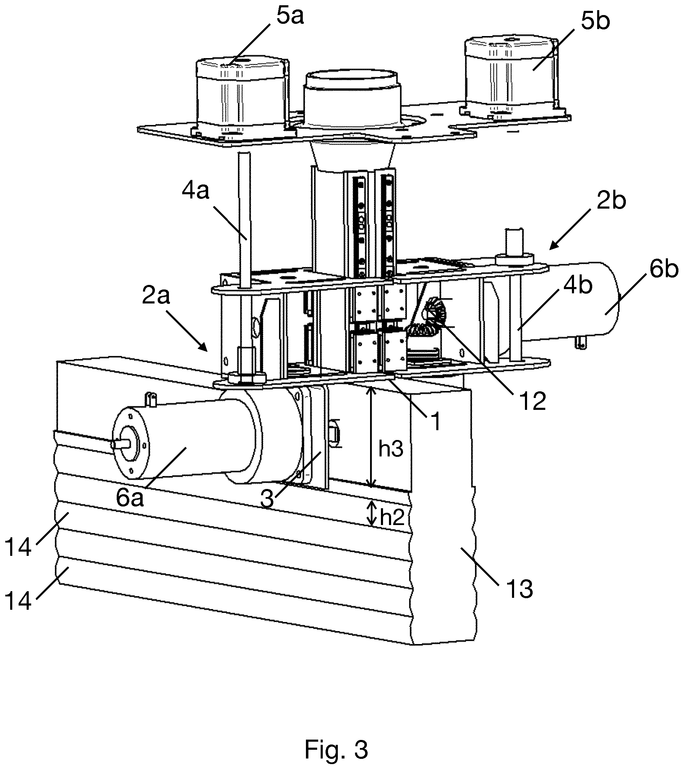

Fig. 3 illustrates the embodiment and same step as Fig. 2, but from a different side.

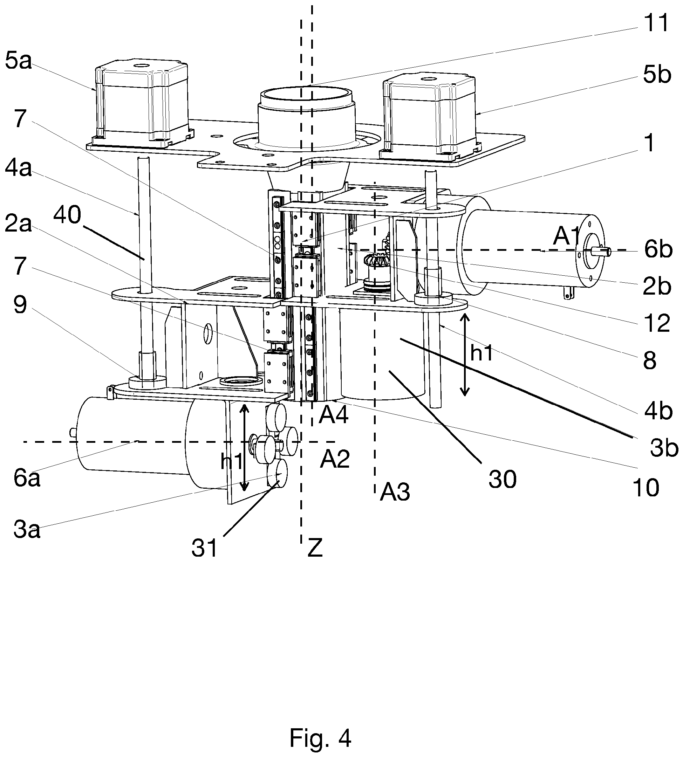

Fig. 4 depicts the 3D construction printer head in accordance with one embodiment of the present invention, when the nozzle 1 is not extruding building material. Accordingly, this figure does not show any printed elements.

The 3D construction printer head according to the invention comprises a nozzle 1 having an inlet 11 and an outlet 10; at least one finisher arrangement 2 and a finisher arrangement motor 5 and a lifting arrangement 4 for moving the finisher arrangement 2. The arrangement motor 5 and the lifting arrangement 4 move the finisher arrangement 2 together. The finisher arrangement 2 preferably has an up-and-down movement. The nozzle 1 is configured to extrude a layer 14 of building material via its outlet 10, the building material can be concrete, other cement-based building materials and other building materials with silicate, polymer or other binder. The finisher arrangement motor 5 and the lifting arrangement 4 are connected to each other. The finisher arrangement 2 comprises an active finisher element 3 for at least partially smoothening a surface of the printed element 13, and an active finisher element motor 6 for moving, rotating the active finisher element 3.

The height h1 of the active finisher element 3 is larger than the height h2 of the layer 14 in order to be able to sufficiently and thoroughly finish the surface and smoothen the bumps between the printed layers 14. Preferably, the height h1 is at least 1.5-2 times, more preferably three times taller than the height h2 of the layer 14. The height h2 of one printed layer 14 is usually about 1 to 5 cm, usually about 2 cm. The preferred height h1 of the active finisher element 3 is about 6-7 cm, being able to finish, i.e. smoothen a surface having a height h3 of the size of three layers together.

Preferably, the printer head comprises two finisher arrangements 2, a first finisher arrangement 2a and a second finisher arrangement 2b, as illustrated in Figs. 1-4. The first finisher arrangement 2a comprises a first active finisher element motor 6a and a first active finisher element 3a. The second finisher arrangement 2b comprises a second active finisher element motor 6b and a second active finisher element 3b. The printer head according to the embodiment of Figs. 1-4 further comprises a first finisher arrangement motor 5a and a second finisher arrangement motor 5b and a first lifting arrangement 4a and a second first lifting arrangement 4b such that the first finisher arrangement 2a and the second finisher arrangement 2b can move independently from each other. Preferably, the number of nozzles 1 is one. The nozzle 1 in Figs. 1-4 has a bigger inlet 11 than an outlet 10 such that the nozzle 1 works as a confusor. However, the inlet 11 and the outlet 10 can be the same size as well, or the outlet 10 may be smaller than the inlet 11.

The cross section of the nozzle 1 in any embodiments of the invention can be rectangular, square, circle or triangle as well. The size of the cross section of the nozzle 1 can be for example 30x30 or 50x50 mm.

The number of finisher arrangements 2, active finisher elements 3, lifting arrangements 4, finisher arrangement motors 5 and active finisher element motors 6 is optional, but preferably the number of finisher arrangements 2, active finisher elements 3, lifting arrangements 4, finisher arrangement motors 5 and active finisher element motors 6 is equal to each other. In the embodiment of Figs. 1-4, the number of finisher arrangements 2, active finisher elements 3, lifting arrangements 4, finisher arrangement motors 5 and active finisher element motors 6 is two.

The printer head according to the embodiment of Figs. 1-4 also comprises an optional linear guiding arrangement 7 for guiding the movement of the finisher arrangement 2 in the direction of axis Z. Advantageously, the nozzle 1, more particularly the longitudinal axis A4 of the nozzle 1 is substantially parallel to the movement direction of the linear guiding arrangement 7 and the axis Z. The movement of the printer head and its nozzle 1 during printing is parallel to axis Y. Axis Y and Z are perpendicular to each other. However, the printer head can also move in a curved direction, thereby printing a curved printed element 13.

During the application of the printer head, the first active finisher element 3a at least partially finishes, i.e. smoothens a surface of a first side of the printed element 13; and a second active finisher element 3b at least partially finishes, i.e. smoothens a surface of a second side of the printed element 13. Advantageously these two sides, for example two opposite sides of a printed element 13 can be finished simultaneously. The active finishing helps fully bond the layers 14. When the printed element 13 is a wall, the two opposite sides (e.g. inner and outer) can be both finished in order to create a strong wall structure. The two sides can be finished at the same time or after each other as well.

The printer head according to the embodiment of Figs. 1-4 includes a disk 31 as a first active finisher element 3a, and a cylinder 30 as second active finisher element 3b. The disk 31 rotates around its rotation axis A2. The rotation axis A2 is substantially parallel to the rotation axis A1 of the active finisher element motor 6. The cylinder 30 rotates around its rotation axis A3. The rotation axis A3 is substantially perpendicular to the rotation axis A1 of the active finisher element motor 6. The cylinder 30 is connected to the active finisher element motor 6 by an angle gear drive 12.

The lifting arrangement 4 may be a spindle 40 or a lever 41 for example. In Figs. 1-4, both lifting arrangements 4a, 4b are spindles 40. The spindle 40 have a first end 8 and a second end 9 that are also shown in Figs. 1-4.

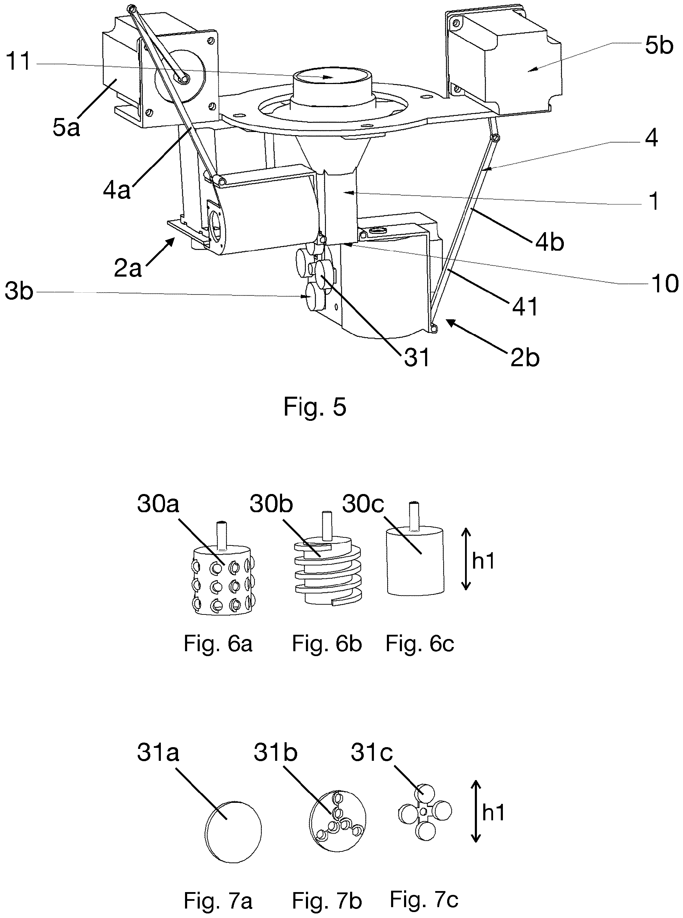

Fig. 5 depicts a possible embodiment of the invention, where the lifting arrangement 4 is a lever. The printer head may also include multiple lifting arrangements 4: at least a first lifting arrangement 4a and a second lifting arrangement 4b. In the embodiment of Fig. 5, there are two lifting arrangements 4, a first lifting arrangement 4a and a second lifting arrangement 4b, both being levers 41. However, it is also possible that the lifting arrangements 4 are different. As an example, the first lifting arrangement 4a could be a spindle 40 and the second lifting arrangement 4b a lever 41.

Furthermore, the printer head of Fig. 5 has a first finisher arrangement 2a and a second finisher arrangement 2b; a first active finisher element 3a and a second active finisher element 3b; a first finisher arrangement motor 5a and a second finisher arrangement motor 5b. The nozzle 1 of the printer head according to the embodiment of Fig. 5 has a bigger inlet 11 than an outlet 10, such that the nozzle 1 works as a confusor. However, this is only optional, in other embodiments the inlet 11 may be smaller than or the same size as the outlet 10.

The active finisher element 3 may be a cylinder 30 or a disk 31 for example. The active finisher element 3 can be chosen by the user as they wish, for example according to the material, e.g. type of the concrete used, the purpose or the use of the printed element 13. In a preferred embodiment, the inner side of a wall as printed element 13 is finished with a cylinder 30; and the outer side of a wall as printed element 13 is finished with a disk 31.

Fig. 6a, 6b and 6c show different possible embodiments of the cylinder 30. The cylinder 30 can have different shapes and surfaces, it can be a perforated cylinder 30a, a threaded cylinder 30b or a solid cylinder 30c. By solid, we mean a cylinder having smooth and flat surface. The perforated cylinder 30a is shown in Fig. 6a, the threaded cylinder 30b is shown in Fig. 6b, and the solid cylinder 30c is shown in Fig. 6c. However, these are only examples, other shape and surface can be created as well. The shape and/or surface of the active finisher elements 3 will affect the finished surface of a printed elements 13. As an example, a printed element 13 finished with a perforated cylinder 30a as active finisher element will have a different patterned surface than a printed element 13 finished with a threaded cylinder 30b or a solid cylinder 30c.

Fig. 7a, 7b and 7c illustrate different possible embodiments of the disk 31. The disk 31 can have different shapes and surfaces. See Fig. 7a for a solid disk 31a, Fig. 7b for a perforated disk 31b, and Fig. 7c for a divided disk 31c. However, these are only examples, other shape and surface can be created as well. As mentioned above, the shape and/or surface of the disk 31 will affect the finished surface of a printed elements 13. As an example, a printed element 13 finished with a solid disk 31a as active finisher element will have a different patterned surface than a printed element 13 finished with a perforated disk 31b or a divided disk 31c. The divided disk 31c comprises four smaller disks in Fig. 7c, but it can be divided into less or more parts as well.

The printer head as described above can be used with any 3D construction printers available on the market.

Another embodiment of the invention can also be a 3D construction printer comprising the printer head as described above. The 3D construction printer may further comprise controller electronics.

The application of the 3D construction printer head according to the invention comprises the following steps:
- the nozzle 1 is extruding layers 14 of building material via its outlet 10 one after another thereby creating a printed element 13 such as a wall;
- after printing at least two layers 14, the finisher arrangement motor 5 and a lifting arrangement 4 are moving a finisher arrangement 2 with an active finisher element 3;
- the active finisher element motor 6 moving, i.e. rotating an active finisher element 3 such that the active finisher element 3 at least partially smoothens, i.e. finishes a surface of the printed element 13.

The height of the finished surface h3 is larger than a height h2 of the layer 14 so that the finishing movement removes the bumps in the surface and really bonds the layers 14 together. The printed element 13 created by the printer head can be straight or curved too.

When there are two active finisher elements 3, the first active finisher element 3a at least partially smoothens a surface of a first side of the printed element 13, and a second active finisher element 3b at least partially smoothens a surface of a second side of the printed element 13. Preferably, during finishing, i.e. smoothening the active finisher elements 3a, 3b are continuously rotating around their rotation axes A2, A3.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. The reference signs used in the claims shall not be construed as limiting the scope. Unless otherwise indicated, the drawings are intended to be read (e.g., cross-hatching, arrangement of parts, proportion, degree, etc.) together with the specification, and are to be considered a portion of the entire written description of this disclosure. As used in the description, the terms "horizontal", "vertical", "left", "right", "up" and "down", as well as adjectival and adverbial derivatives thereof (e.g., "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or axis of rotation, as appropriate.

## Claims

1. 3D construction printer head for creating a printed element (13), the head comprising a nozzle (1) having an inlet (11) and an outlet (10), the nozzle (1) being configured to extrude a layer (14) of building material via its outlet (10);
at least one finisher arrangement (2);
a finisher arrangement motor (5) and a lifting arrangement (4) for moving the finisher arrangement (2), the finisher arrangement motor (5) and the lifting arrangement (4) being connected to each other;
the finisher arrangement (2) comprising an active finisher element (3) for at least partially smoothening a surface of the printed element (13), and an active finisher element motor (6) for rotating the active finisher element (3);
a height (h1) of the active finisher element (3) being larger than the height (h2) of the layer (14).

2. The printer head according to claim 1, wherein the printer head comprises two active finisher element motors (6a, 6b) and two active finisher elements (3), a first active finisher element (3a) for at least partially smoothening a surface of a first side of the printed element (13), and a second active finisher element (3b) for at least partially smoothening a surface of a second side of the printed element (13).

3. The printer head according to claim 2, wherein the printer head comprises two finisher arrangements (2), a first finisher arrangement (2a) and a second finisher arrangement (2b); the first finisher arrangement (2a) comprising the first active finisher element (3a) and the second finisher arrangement (2b) comprising the second active finisher element (3b).

4. The printer head according to claim 3, wherein the printer head comprises two finisher arrangement motors (5a, 5b) and two lifting arrangements (4a, 4b) such that the first finisher arrangement (2a) and the second finisher arrangement (2b) can move independently from each other.

5. The printer head according to any of claims 1 to 4, wherein the printer head comprises a linear guiding arrangement (7) for guiding the movement of the finisher arrangement (2) in the direction of axis z (Z).

6. The printer head according to any of claims 1 to 5, wherein the active finisher element (3) is a cylinder (30) or a disk (31).

7. The printer head according to claim 6, wherein the disk (31) is configured to rotate around its rotation axis (A2), said rotation axis (A2) being substantially parallel to the rotation axis (A1) of the active finisher element motor (6); and/or
the cylinder (30) is configured to rotate around its rotation axis (A3), said rotation axis (A3) being substantially perpendicular to the rotation axis (A1) of the active finisher element motor (6), the cylinder (30) being connected to said active finisher element motor (6) by an angle gear drive (12).

8. The printer head according to any of claim 6 or 7, wherein the cylinder (30) is any of a perforated (30a), a threaded (30b) or a solid (30c) cylinder; and/or the disk (31) is any of a solid (31a), a perforated (31b) or a divided (31c) disk.

9. The printer head according to claim 5, wherein a longitudinal axis (A4) of the nozzle (1) is substantially parallel to the movement direction of the linear guiding arrangement (7) and the axis z (Z).

10. The printer head according to any of claims 1 to 9, wherein the lifting arrangement (4) is a spindle (40) or a lever (41).

11. The printer head according to any of claims 1 to 10, wherein the printed element (13) is a wall.

12. Method for the application of a 3D construction printer head according to claim 1, wherein the method comprises the following steps:
a nozzle (1) extruding layers (14) of building material via its outlet (10) one after another thereby creating a printed element (13);
after printing at least two layers (14) a finisher arrangement motor (5) and a lifting arrangement (4) moving a finisher arrangement (2) with an active finisher element (3);
an active finisher element motor (6) moving an active finisher element (3) such that the active finisher element (3) at least partially smoothens a surface of the printed element (13), such that a height of the finished surface (h3) is larger than a height (h2) of the layer (14).

13. The method according to claim 12, wherein a first active finisher element (3a) at least partially smoothens a surface of a first side of the printed element (13), and a second active finisher element (3b) at least partially smoothens a surface of a second side of the printed element (13).

14. The method according to claim 12 or 13, wherein during smoothening the active finisher element (3a, 3b) is continuously rotating around its rotation axis (A2, A3).

15. A 3D construction printer comprising the printer head according to any of claims 1 to 11.
